# EUROPÄISCHE PATENTSCHRIFT

(11) **EP 1 250 992 B1**
(45) Veröffentlichungstag und Bekanntmachung des Hinweises auf die Patenterteilung: **09.11.2005**
(21) Anmeldenummer: 02007441.5
(22) Anmeldetag: 30.03.2002
(51) Int. Cl.: B29C 35/00, B29C 51/42, B29C 51/46

(54) **Verfahren zum Kühlen der beiden Werkzeughälften eines Formwerkzeuges und Mischeinheit zur Durchführung des Verfahrens**
Process for cooling both mould halves of a forming tool and mixing unit to carry out the method
Procédé pour refroidir les deux moitiés du moule d'un outil de formage et unité de mélange pour la mise en oeuvre du procédé

(30) Priorität: 21.04.2001 DE 10119567
(43) Veröffentlichungstag der Anmeldung: 23.10.2002
(73) Patentinhaber: Adolf Illig Maschinenbau GmbH & Co. KG, 74081 Heilbronn (DE)
(72) Erfinder: Wüst, Jürgen, 74182 Obersulm-Affaltrach (DE); Eichbauer, Volker, 74223 Flein (DE); Firzlaff, Michael, 74223 Flein (DE); Trautwein, Herbert, 71737 Kirchberg (DE)

(56) Entgegenhaltungen:
- EP-A- 0 194 629
- EP-A- 0 904 911
- DE-A- 2 261 922
- DE-B- 2 805 215

## Beschreibung

Die Erfindung betrifft ein Verfahren zum Kühlen der beiden Werkzeughälften eines Formwerkzeuges zum Herstellen von Behältern aus einer thermoplastischen Kunststofffolie nach der Gattung des Hauptanspruches sowie eine Mischeinheit zur Durchführung des Verfahrens.

Aus der DE 31 35 206 C1 ist es bekannt, das von einem Kühlgerät gelieferte Kühlmittel einem Verteilerventil zuzuführen, das eine Aufteilung des Volumenstromes auf Oberteil und Unterteil des Formwerkzeuges vornimmt. Die Verteilung des Kühlmittels erfolgt in Abhängigkeit der Temperaturdifferenz zwischen Oberteil und Unterteil im Sinne einer Regelung in der Weise, dass diese Differenz möglichst gering gehalten wird. Diese geringe Temperaturdifferenz ist wichtig, weil bei dem geringen Schnittspalt zwischen Schnittstempel und Matrizenbohrung eine unterschiedliche Temperatur der beiden Werkzeugteile eine unterschiedliche Wärmedehnung zur Folge hat, die schon bei einer geringen Temperaturdifferenz ein Auflaufen der äußeren Schnittstempel auf die Matrizenbohrung und damit eine Beschädigung dieser Teile zur Folge hat.

Diese Art der Temperaturführung weist verschiedene Nachteile auf. Ein Problem ist die repräsentative Temperaturerfassung einer Werkzeughälfte. Ein Temperaturfühler sitzt an einer Stelle in jeder Werkzeughälfte und misst die Temperatur dieser einen Stelle. Das Unterteil mit den Formen der herzustellenden Behälter weist aber in sich Temperaturunterschiede zwischen der Oberfläche der Form (Größenordnung 40° C) und dem Kühlmedium in den Kühlbohrungen (Größenordnung 8° C) auf, die weit größer sind als die maximal zulässige Temperaturdifferenz zwischen den beiden Werkzeughälften von ca. max. 5° C. Es ist also in der Praxis immer ein Problem, eine geeignete Stelle zur Anordnung des Temperaturfühlers zu finden, wobei schon aus baulichen Gründen eine große Beschränkung hinsichtlich den Einbaumöglichkeiten gegeben ist. Auch die Anordnung mehrerer Temperaturfühler und eine Mittelwertbildung löst dieses Problem nicht in der erforderlichen Weise.

Es wurde zwar vorgeschlagen (DE 44 30 824 A1), anstelle der Werkzeugtemperatur die Längendehnung der Werkzeughälften zu messen und als Grundlage für die Volumenstromverteilung heranzuziehen. Diese Lösung scheitert aber an verschiedenen technischen Problemen, um diese relativ geringe Dehnung im Bereich von µm mit ausreichender Genauigkeit zu messen, wobei mindestens eine Werkzeughälfte mit hoher Dynamik bewegt und eventuell geschwenkt wird.

Ein weiteres Problem sind Stillstandszeiten der Thermoformmaschine, die in beiden Werkzeughälften ein anderes Temperaturprofil entstehen lassen als während der Produktion, in der ständig Wärme über die tiefgezogenen Behälter zugeführt wird. In der DE 44 18 064 C1 wird hierzu vorgeschlagen, beim Abstellen der Produktion die Kühlmittelzufuhr zu sperren und dieses umzuwälzen, so dass zumindest kein kaltes Kühlmittel mehr zugeführt wird. Das in den Leitungen und in den Werkzeughälften vorhandene Kühlmittel kühlt die Werkzeughälften aber trotzdem unter die Temperatur, die während der Produktion gegeben ist, so dass beim Wiederanfahren andere Produktionsbedingungen vorliegen als während der Produktion. Um dem entgegenzuwirken müsste über einen zweiten Kreislauf - wie in dieser Schrift angedeutet - mit Heißwasser versucht werden, dieser Abkühlung entgegenzuwirken. Dies verteuert die Thermoformmaschine, weil hierzu extra ein Temperiergerät beigestellt werden muss. Die Problematik der Anordnung der Temperaturfühler innerhalb der Werkzeughälften ist bei diesem Verfahren in gleicher Weise gegeben.

Es hat sich ferner gezeigt, dass der Widerstand des Verteilerventils unterschiedlich ist je nach dessen Kolbenstellung und damit dessen Verteilung. Bei einer Mittelstellung, z. B. Verteilung 50 % - 50 %, herrscht ein größerer Widerstand im Verteilerventil als bei einer Kolbenstellung in einer Endlage, wenn Kühlmittel nur in eine Werkzeughälfte fließt. Dies bedeutet in der Praxis einen sich ständig- je nach Verteilung - ändernden Gesamtvolumenstrom.

Ein weiteres Problem bei den genannten Kühlverfahren liegt darin, dass man bezüglich des Druckes des Kühlmittels abhängig ist von dem vorgeschalteten Kühlgerät bzw. bei Vorhandensein eines betriebsweiten Kühlmittelnetzes vom Druck in diesem Netz. Der Druck ist in beiden Kreisläufen - zum Oberteil und zum Unterteil des Formwerkzeuges - gleich, wobei die Widerstände in den Kühlmittelleitungen und in den Werkzeughälften aber sehr unterschiedlich sein können. Der Volumenstrom kann - bedingt durch den vorgegebenen Druck - nur einen begrenzten, vom Widerstand abhängigen Wert annehmen und bei Bedarf nicht gesteigert werden. Dadurch ist die Kühlmöglichkeit des Formwerkzeuges begrenzt und eine Begrenzung der Taktzahl der Thermoformmaschine gegeben, da diese wesentlich von der Kühlleistung des Formwerkzeuges abhängt.

Ein weiterer Nachteil bei dem bekannten Verfahren ist dadurch gegeben, dass das Kühlmittel während der Produktion direkt aus dem Kühlgerät bzw. Kühlmittelnetz mit einer relativ niedrigen Temperatur in der Größenordnung von 8°C bis 12°C zugeführt wird und sich bis zum Austritt aus den Werkzeughälften auf ca. 20° C erwärmt. Auch diese große Temperaturdifferenz zwischen Vorlauf und Rücklauf führt zu einer ungleichen Temperaturverteilung innerhalb der Werkzeughälften zwischen beiden Seiten, die sich negativ auf die Qualität der geformten Behälter auswirkt, da diese unterschiedlichen Verformungs- und Abkühlungsbedingungen unterworfen sind.

Es kommt hinzu, dass bei einem zentralen Kühlmittelnetz Schwankungen der Temperatur des zugeführten Kühlmittels und seines Druckes in Kauf genommen werden müssen, die nicht beeinflusst werden können. Auch dies führt zur Qualitätsbeeinflussung durch unterschiedliche Kühlbedingungen.

Die Druckschrift DE 28 05 215 B1 zeigt eine Kühlvorrichtung für eine Druckgieß- oder Spritzgießform, bei der die Regulierung der Kühlwassertemperatur automatisch erfolgt. Dieses wird dadurch erreicht, dass der Vorlauf und der Rücklauf mit einem Mischventil verbunden werden, welches zusätzlich einen Anschluss für den Frischwasserzulauf und einen Kühlwasserablauf aufweist. Dem Mischventil nachgeschaltet ist eine Umwälzpumpe. Das Mischventil weist eine elektrische Verstelleinrichtung auf, welcher ein elektronisches Überwachungsgerät zugeordnet ist. Das Überwachungsgerät der Vorrichtung steht in Wirkverbindung mit Thermofühlern und kann bei Meldung einer vorbestimmten Temperatur die Verstelleinrichtung des Mischventils ansteuem. Auf diese Weise wird ein geschlossener Regelkreis zur Konstanthaltung der Kühlmitteltemperatur gebildet. Ob zur Temperaturregelung die Temperatur des Vorlaufs oder des Rücklaufes herangezogen wird ist nicht näher ausgeführt.
Es ist auch nicht beschrieben, ob die Temperaturdifferenz zwischen Vorlauf und Rücklauf in irgendeiner Weise vom Überwachungsgerät erfasst und verarbeitet wird. Nachdem die Umwälzpumpe nicht mit dem Überwachungsgerät in Verbindung steht, muss davon ausgegangen werden, dass keine automatische Beeinflussung des Volumenstromes durch die Umwälzpumpe erfolgt und die - allgemein als verstellbar bezeichnete Umwälzpumpe - z.B. bei Bedarf manuell verstellt wird, z.B. zur Anpassung an unterschiedliche Werkzeuge.
Aus diesem Grund weist die in der Druckschrift DE 28 05 215 B1 beschriebene Vorrichtung den bereits beschriebenen Nachteil auf, dass sie nicht auf große Temperaturdifferenzen zwischen Vorlauf und Rücklauf automatisch reagieren kann, was sich negativ auf die Qualität der geformten Behälter auswirkt, da das Werkzeug eine ungleichmäßige Temperaturverteilung aufweist.

Der Erfindung liegt die Aufgabe zugrunde, diese Nachteile zu vermeiden. Der Temperaturunterschied der Werkzeughälften zwischen Einlauf und Auslauf sollte gering gehalten werden können. Die Kühlung der Werkzeughälften sollte verbessert, die Taktzahl der Thermoformmaschine gesteigert werden. Eine Anpassung des Volumenstromes an den Widerstand der Kühlmittelführung in den Werkzeughälften sollte möglich sein. Zwischen Stillstand und Produktion sollten möglichst geringe Unterschiede in der Temperatur der beiden Werkzeughälften eintreten. Probleme der Temperaturmessung der Werkzeughälften durch Anordnung von Temperaturfühlern in den Werkzeughälften sollten nicht gegeben sein. Insgesamt sollten durch die Erfindung qualitativ gleichmäßige Behälter bei geringem Anfahrausschuss in hoher Taktzahl gefertigt werden können. Ferner sollten bei Bedarf weitere Kühlkreisläufe im Formwerkzeug bzw. in der Thermoformmaschine (z. B. für Auswerfer, Heizungsabdeckung, Folientransport) - unbeeinflusst von den Volumenströmen in den Werkzeughälften - von einem gleichmäßigen Volumenstrom durchströmt werden können. Zur Lösung der Aufgabe wird ein Verfahren mit den Merkmalen des Anspruches 1 vorgeschlagen. Die Mischeinheit zur Durchführung des Verfahrens ist gekennzeichnet durch die Merkmale des Anspruches 7.

Das Verfahren wird anhand der schematischen Zeichnungen näher beschrieben. Es zeigen:

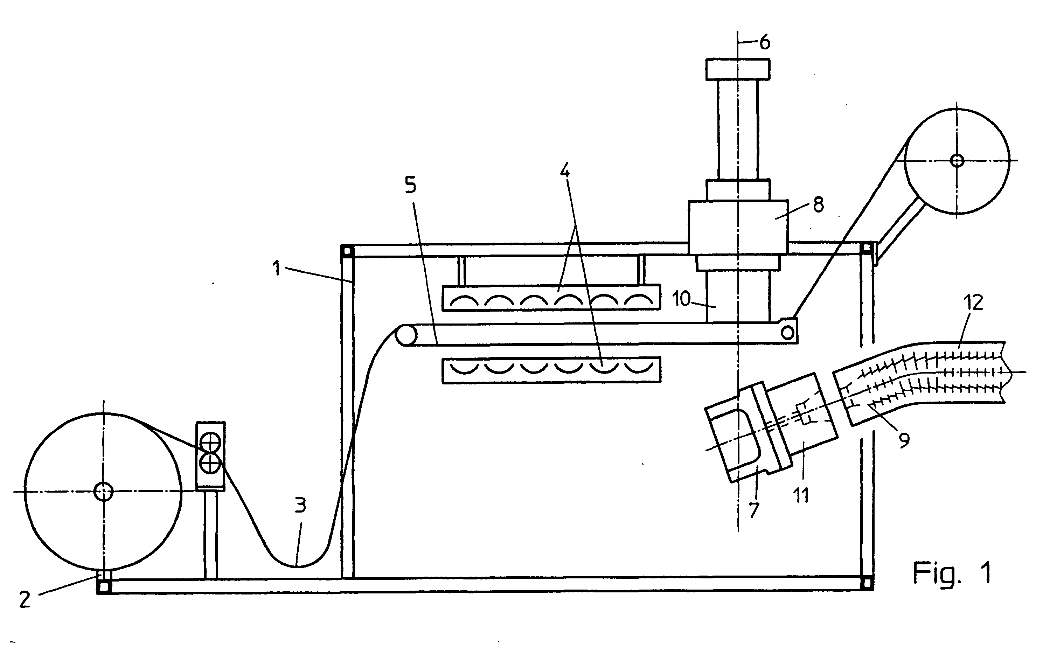

- Figur 1: eine Längsdarstellung einer Thermoformmaschine mit eingebautem Formwerkzeug, bei der die Erfindung Anwendung findet.
- Figur 2: einen Schnitt durch ein Formwerkzeug.
- Figur 3: ein Blockschaltbild der Kühlmittelführung des Formwerkzeuges.
- Figur 4: eine Variante der Beeinflussung des Volumenstromes eines Kühlkreislaufes.

In einem Gestell 1 sind die wesentlichen Teile der Thermoformmaschine untergebracht, in die ein Formwerkzeug zur Anwendung des Verfahrens eingebaut wird. Eine Rollenaufnahme 2 steht eingangsseitig und entfällt, wenn die zu verformende Folienbahn 3 aus thermoplastischem Kunststoff direkt von einem Extruder zugeführt wird. Auch die Heizeinrichtung 4 ist bei Extruderverkettung eventuell nicht erforderlich. Eine intermittierend betriebene Transporteinrichtung 5 führt die Folienbahn 3 zu einer Formstation 6 mit Untertisch 7 und Obertisch 8, in der mittels Druckluft oder Vakuum Behälter 9 mittels des Formwerkzeuges, bestehend aus Oberteil 10 und Unterteil 11, geformt und ausgestanzt werden. Nach dem Absenken und ggf. Schwenken des Formtisches 7 mit dem formgebenden Unterteil 11 werden die Behälter 9 in Stapelrinnen 12 ausgestoßen oder in entsprechenden Nachfolgeeinrichtungen übergeben.

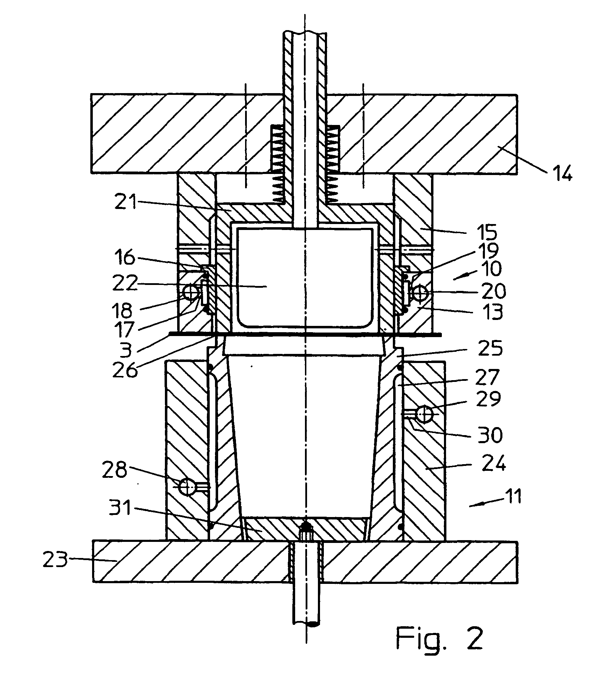

Figur 2 zeigt den Aufbau eines kombiniert formenden und stanzenden Werkzeuges, das der Einfachheit halber als Formwerkzeug bezeichnet wird und aus Oberteil 10 und Unterteil 11 besteht. Das Oberteil 10 setzt sich zusammen aus der Matrize 13, der Kopfplatte 14 und der Zwischenplatte 15, in die die einzelnen Formnester eingearbeitet sind - einreihig wie dargestellt oder mehrreihig. In jeder Matrizenbohrung sitzt eine Buchse 16, die eine Kühlkammer 17, eingeformt in die Matrize 13, abdichtet. Zu der Kühlkammer 17 führen Bohrungen 18, 19, 20, um ein Kühlmittel zu- und abführen zu können. Über die Buchse 16 wird der in ihr gleitend geführte Niederhalter 21 gekühlt, der mit seiner Stirnfläche auf den Rand des geformten Behälters 9 trifft und diesen kühlt. In jedem Niederhalter 21 sitzt ein verschiebbarer Streckhelfer 22.

Das Unterteil 11 besteht aus einer Grundplatte 23, einem Kühlblock 24 und in diesen eingesetzte Schnittstempel 25 mit der Form der herzustellenden Behälter 9 und mit einer Schnittkante 26, die im Zusammenwirken mit der Matrize 13 den Behälter 9 nach dem Formen ausstanzt. Zwischen Schnittstempel 25 und Kühlblock 24 ist eine Kammer 27 zur Durchleitung eines Kühlmittels vorgesehen, das über Bohrungen 28, 29, 30 zu- bzw. abgeführt wird. Ein Formboden 31, verschiebbar ausgebildet, dient zum Auswerfen der ausgestanzten Behälter 9.

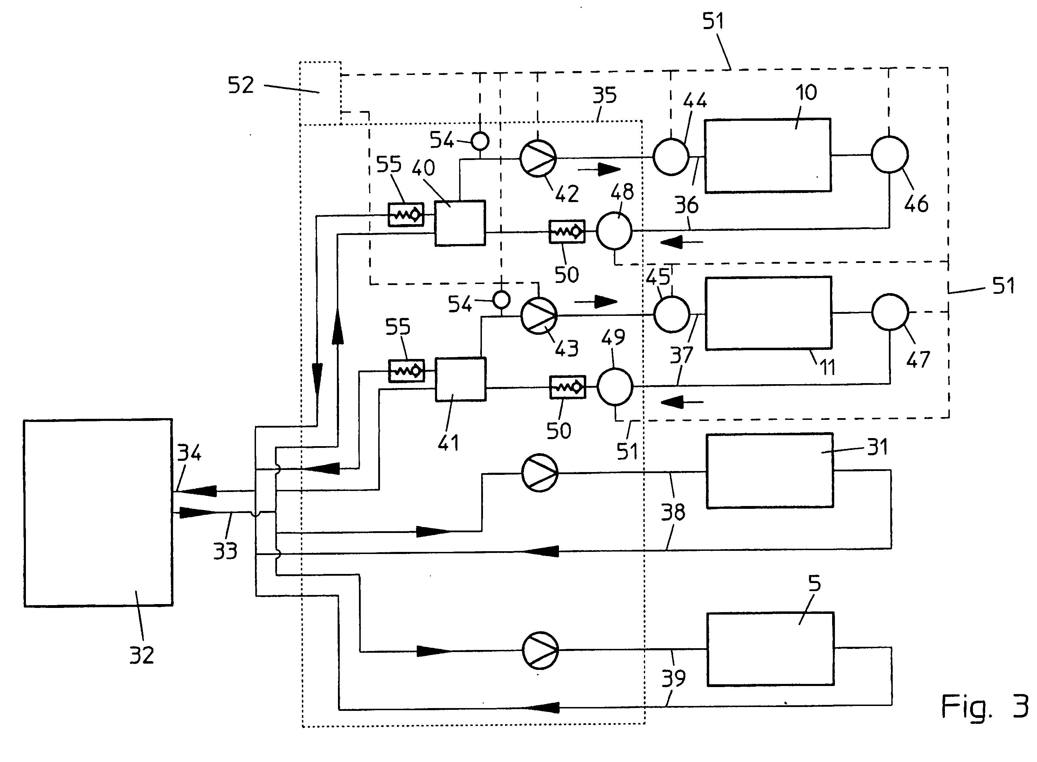

Wie in Figur 3 dargestellt wird der Thermoformmaschine ein Kühlmittel unter einem bestimmten Druck mit einer bestimmten Temperatur durch eine Kühlmittelanlage 32 zur Verfügung gestellt. Dabei kann es sich bei der Kühlmittelanlage 32 um ein eigenständiges Kühlgerät mit Vorlauf 33 und Rücklauf 34 handeln, das der Thermoformmaschine beigestellt wird und das Kühlmittel mit einer Temperatur von ca. 4°C bis 12° C bei einem Druck von ca. 4 bis 6 bar zur Verfügung stellt. Es kann aber auch ein Anschluss an den Vorlauf 33 und den Rücklauf 34 eines zentralen betriebsweiten Kühlmittelnetzes erfolgen.

Vorlauf 33 und Rücklauf 34 führen zu einer Mischeinheit 35, die das Kühlmittel aufteilt in einen Kühlkreislauf 36 für das Oberteil 8, einen Kühlkreislauf 37 für das Unterteil 11 und ggf. in weitere Kühlkreisläufe 38, 39 für das Formwerkzeug bzw. für Bauteile der Thermoformmaschine, z. B. zur Kühlung der Formböden 31 oder der Transporteinrichtung 5.

Hierzu werden Zulauf 33 und Durchlauf 34 verteilt entsprechend der Anzahl der zu bildenden Kühlkreisläufe 36 bis 39. Zulauf 33 und Rücklauf 34 sind in jedem Fall verbunden mit zwei Mischventilen 40, 41. Das Mischventil 40 speist dabei den Kühlkreislauf 36 für das Oberteil 10, das andere Mischventil 41 den Kühlkreislauf 37 für das Unterteil 11. Bei den Mischventilen 40, 41 handelt es sich um handelsübliche Mischventile, insbesondere eingesetzt im Heizungsbau, mit denen eine Vermischung zwischen zwei Kreisläufen möglich ist je nach ihrem Stellgrad.

In jedem Kühlkreislauf 36, 37 ist zwischen Mischventil 40, 41 und Oberteil 10 bzw. Unterteil 11 eine Umwälzpumpe 42, 43 eingebaut, ferner ein Temperaturfühler 44, 45 zur Messung der Vorlauftemperatur, und im Rücklauf nach dem Oberteil 10 bzw. Unterteil 11 ein Temperaturfühler 46, 47 zur Messung der Rücklauftemperatur, ein Durchflussmesser 48, 49 und sicherheitshalber ein Rückschlagventil 50.

Steuerleitungen 51 verlaufen zwischen einer Steuerung 52 und den Temperaturfühlern 44 bis 47, den Durchflussmessern 48, 49 und den Umwälzpumpen 42, 43, um das nachfolgend beschriebene Verfahren steuern zu können.

In der nachfolgenden Beschreibung des Verfahrensablaufes wird davon ausgegangen, dass ein neues Formwerkzeug in eine Thermoformmaschine eingebaut wird und diese in Produktion gehen soll. Nach dem Anschluss von Oberteil 10 und Unterteil 11 an die Kühlmittelkreisläufe 36, 37 weisen Oberteil 10 und Unterteil 11 Raumtemperatur auf. Die Umwälzpumpen 42, 43 werden gestartet und wälzen das Kühlmittel zwischen Mischventil 40, 41 und Oberteil 10 und Unterteil 11 um. Von der Steuerung 52 wird als Vorlauftemperatur jeweils ein Wert von ca. 16 bis 20° vorgegeben, also im Bereich der Raumtemperatur. Oberteil 10 und Unterteil 11 nehmen diese Temperatur an, ohne dass dabei mit Kondensat in Leitungen und Formwerkzeug gerechnet werden muss, wie es z. B. der Fall ist, wenn Kühlwasser mit ca. 8°C zugeführt wird, das direkt von der Kühlmittelanlage 32 kommt.

Sollte die Temperatur des Kühlmittels in einem der Kühlkreisläufe 36, 37 über die vorgegebene Vorlauftemperatur ansteigen, wird durch Beeinflussung des entsprechenden Mischventils 40, 41 über die Steuerung 52 eine erforderliche Menge Kühlwasser aus dem Zulauf 33 beigemischt, und zwar im Sinne einer Regelung der Vorlauftemperatur. Eine gleiche Menge Kühlmittel fließt über den Rücklauf 34 zur Kühlmittelanlage 32.

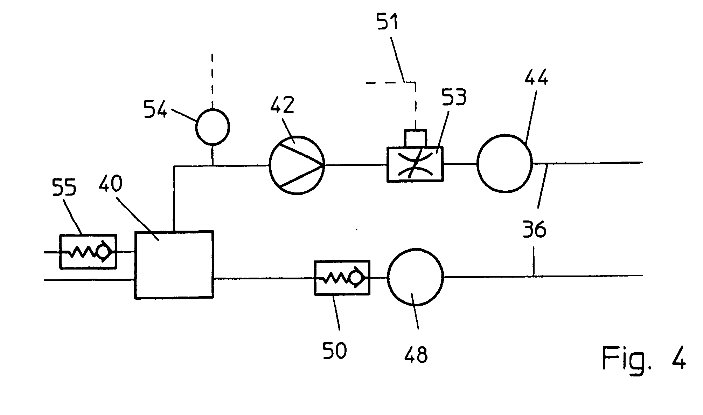

Während dieser Zeit des Stillstandes der Thermoformmaschine ist es möglich, den Volumenstrom in den Kühlwasserkreisläufen 36, 37 relativ gering zu halten, was mit einer als Regelpumpe ausgebildeten Umwälzpumpe 42, 43 direkt durch Beeinflussung ihrer Fördermenge möglich ist. Eine zweite Lösung der Beeinflussung des Volumenstromes in den Kühlkreisläufen 36, 37 besteht darin, ein einstellbares Drosselventil 53 hinter einer Umwälzpumpe 42, 43 einzubauen und eine Umwälzpumpe 42, 43 mit einem nicht veränderbaren Volumenstrom einzusetzen, wie es in Figur 4 in einem Ausschnitt dargestellt ist.

Wenn die Thermoformmaschine gestartet wird, erhöht man den Volumenstrom in den Kühlkreisläufen 36, 37 durch Ansteuerung der Umwälzpumpen 42, 43 bzw. der Drosselventile 53 entweder in Form einer Stellung - oder in Form einer Regelung über die mittels der Durchflussmesser 48, 49 gemessenen Werte - auf einen vorgegebenen Wert. Die Stellung der Mischventile 40, 41 wird von der Steuerung 52 in der Weise beeinflusst, dass die Vorlauftemperatur in den Kühlkreisläufen 36, 37 auf dem vorgegebenen Wert gehalten wird, in dem eine entsprechende Kühlmittelmenge aus dem Vorlauf 33 zugemischt wird. Wird die Temperaturdifferenz zwischen Vorlauftemperatur und Rücklauftemperatur zu groß, wird der Kühlmittelstrom in den Kühlkreisläufen 36, 37 bis zur maximalen Förderleistung der Umwälzpumpen 42, 43 erhöht, um diese Temperaturdifferenz möglichst gering zu halten.

Wird die Thermoformmaschine stillgesetzt, z. B. bei Pausen, Störungen, erfolgt wieder eine Reduzierung des Volumenstromes auf einen vorgegebenen Wert.

Bei diesem Verfahrensablauf ist es auf einfache Weise möglich, die Vorlauftemperatur von Oberteil 10 und Unterteil 11 auf einem unterschiedlichen Wert zu halten, sollte sich dies als vorteilhaft erweisen. Man kann auf diese Weise sogar Maßabweichungen der - fertigungstechnisch bedingten - Stichmaße der Formnester durch unterschiedliche Wärmeausdehnung der beiden Werkzeughälften ausgleichen. Pro Formwerkzeug würde eine solche vorteilhafte Temperaturdifferenz ermittelt und dann bei Einbau des Formwerkzeuges der Steuerung 52 vorgegeben. Auf gleiche Weise können werkzeugbedingte, als vorteilhaft ermittelte Parameter - wie Temperaturen, Temperaturdifferenzen und Volumenströme - gespeichert und dem Formwerkzeug über die Steuerung 52 beim Einbau zugeordnet werden.

Anstelle der Vorlauftemperatur kann in gleicher Weise die Rücklauftemperatur in den Kühlkreisläufen 36, 37 zur Regelung der zugemischten Kühlmittelmenge aus der Kühlmittelanlage 32 herangezogen werden, um die gewünschten Vorteile zu erzielen.

Zur Absicherung des Verfahrensablaufes und der Bauteile der Mischeinheit hat es sich als vorteilhaft erwiesen, in die Kühlkreisläufe 36, 37 vor den Umwälzpumpen 42, 43 einen Drucksensor 54 einzubauen. Dieser überwacht den Eingangsdruck der Umwälzpumpen 42, 43, der einen Mindestdruck nicht unterschreiten sollte. Rückschlagventile 55 im Rücklauf zwischen Mischventil 40, 41 und Kühlmittelanlage 32 verhindern einen unter ungünstigen Bedingungen auftretenden Kühlmittelfluss entgegen der vorgesehenen Richtung.

## Patentansprüche

1. Verfahren zum Kühlen der beiden Werkzeughälften (10, 11) eines Formwerkzeuges zum Tiefziehen von Behältern (9) aus thermoplastischem Kunststoff, die von einem Kühlmittel durchflossen werden, wobei die Temperaturdifferenz zwischen den beiden Werkzeughälften (10, 11) auf einem vorgegebenen Wert gehalten, das von einer zentralen Kühlmittelanlage (32) zugeführte Kühlmittel je einem Mischventil (40, 41) für Oberteil (10) und Unterteil (11) zugeführt und von diesem aus durch je eine Umwälzpumpe (42, 43) den beiden Werkzeughälften (10, 11) über einen Kühlkreislauf (36, 37) zugeführt wird in der Weise, dass die Vorlauftemperatur oder Rücklauftemperatur der Kühlkreisläufe (36, 37) auf einen vorgegebenen Wert geregelt wird und bei Überschreitung dieses Wertes eine Zumischung von Kühlmittel aus der Kühlmittelanlage (32) über das Mischventil (40, 41) erfolgt, und der Volumenstrom in den Kühlkreisläufen (36, 37) in Abhängigkeit der Differenz zwischen Vorlauf und Rücklauftemperatur beeinflusst wird.

2. Verfahren nach Anspruch 1, **dadurch gekennzeichnet, dass** die Vorlauftemperatur oder Rücklauftemperatur der Kühlkreisläufe (36, 37) auf einen unterschiedlichen Wert geregelt wird.

3. Verfahren nach einem der Ansprüche 1 oder 2, **dadurch gekennzeichnet, dass** der Volumenstrom in den Kühlkreisläufen (36, 37) in Abhängigkeit des Zustandes der Thermoformmaschine ― Stillstand oder Produktion - beeinflusst wird.

4. Verfahren nach einem der Ansprüche 1 bis 3, **dadurch gekennzeichnet, dass** der Volumenstrom in den Kühlkreisläufen (36, 37) stufenlos beeinflusst wird.

5. Verfahren nach einem der Ansprüche 3 oder 4, **dadurch gekennzeichnet, dass** die Veränderung des Volumenstromes durch eine Veränderung der Pumpenleistung der Umwälzpumpen (42, 43) vorgenommen wird.

6. Verfahren nach einem der Ansprüche 3 oder 4, **dadurch gekennzeichnet, dass** die Veränderung des Volumenstromes durch eine Veränderung des Querschnittes eines Drosselventils (53) in jedem Kühlkreislauf (36, 37) vorgenommen wird.

7. Mischeinheit für ein Kühlmittel, angeordenbar zwischen einer Kühlmittelanlage und den beiden Werkzeughälften (10, 11) eines Formwerkzeuges zum Tiefziehen von Behältern (9) aus thermoplastischer Kunststofffolie,
- die mindestens zwei Mischventile (40, 41) aufweist, welche eingangsseitig mit der Kühlmittelanlage (32) und ausgangsseitig mit je einem Kühlkreislauf (36, 37) für Oberteil (10) und Unterteil (11) in Verbindung stehen,
- die in jedem Kühlkreislauf (36, 37) eine Umwälzpumpe (42, 43) und Mittel (42, 43, 53) zur Veränderung des Volumenstroms aufweist,
- die in jedem Kühlkreislauf (36, 37) im Vorlauf und im Rücklauf Temperaturfühler (44, 45, 46, 47) aufweist,
- die eine Steuerung (52) aufweist zur Regelung der Vorlauftemperatur oder der Rücklauftemperatur in den Kühlkreisläufen (36, 37) durch Ansteuerung der Mischventile (40, 41) und Zumischung von Kühlmittel aus der Kühlmittelanlage (32) in die Kühlkreisläufe (36, 37) und zur Regelung des Volumenstromes in den Kühlkreisläufen (36, 37) in Abhängigkeit der Differenz zwischen Vorlauf- und Rücklauftemperatur durch Ansteuerung der Mittel (42,43,53) zur Veränderung des Volumenstroms.

8. Mischeinheit nach Anspruch 7, **dadurch gekennzeichnet, dass** als Mittel (42, 43) zur Veränderung des Volumenstromes Umwälzpumpen (42, 43) als Regel pumpe mit veränderbarer Förderleistung eingebaut sind.

9. Mischeinheit nach Anspruch 7, **dadurch gekennzeichnet, dass** als Mittel (53) zur Veränderung des Volumenstromes hinter den Umwälzpumpen im Querschnitt veränderbare Drosselventile (53) eingebaut sind.

10. Mischeinheit nach einem der Ansprüche 7 bis 9, **gekennzeichnet durch** je einen im Kühlkreislauf (36, 37) angeordneten Durchflussmesser (48, 49), der mit der Steuerung (52) in Verbindung steht.

11. Mischeinheit nach einem der Ansprüche 7 bis 10, **gekennzeichnet durch** je ein im Kühlkreislauf (36, 37) angeordnetes Rückschlagventil (50).

12. Mischeinheit nach einem der Ansprüche 7 bis 11, **gekennzeichnet durch** einen im Kühlkreislauf (36, 37) vor den Umwälzpumpen (42, 43) angeordneten Drucksensor (54).

13. Mischeinheit nach einem der Ansprüche 7 bis 12, **gekennzeichnet durch** ein im Rücklauf zwischen Mischventil (40, 41) und Kühlmittelanlage (32) angeordnetes Rückschlagventil (55).

## Claims

1. A method for cooling the two tool halves (10, 11) of a moulding tool for deep drawing of containers (9) made of thermoplastic material, through which a coolant flows, wherein the temperature difference between the two tool halves (10, 11) is held at a predetermined value, the coolant supplied from a central coolant system (32) is supplied to a mixing valve (40, 41) each for the upper part (10) and the lower part (11) and is fed therefrom by a circulating pump (42, 43) each to the two tool halves (10, 11) via a cooling circuit (36, 37) in a manner such that the outflow temperature or return temperature of the cooling circuits (36, 37) is regulated at a predetermined value and if this value is exceeded, coolant is added from the coolant system (32) via the mixing valve (40, 41) and the flow rate in the cooling circuits (36, 37) is influenced depending on the difference between the outflow and return temperature.

2. The method according to claim 1, **characterised in that** the outflow temperature or the return temperature of the cooling circuits (36, 37) are regulated at a different value.

3. The method according to one of claims 1 or 2,
**characterised in that** the flow rate in the cooling circuits (36, 37) is influenced depending on the state of the thermoforming machine - standstill or production.

4. The method according to any one of claims 1 to 3, **characterised in that** the flow rate in the cooling circuits (36, 37) is influenced continuously.

5. The method according to one of claims 3 or 4, **characterised in that** the flow rate is varied by varying the pump power of the circulating pumps (42, 43).

6. The method according to one of claims 3 or 4, **characterised in that** the flow rate is varied by varying the cross-section of a throttle valve (53) in each cooling circuit (36, 37).

7. A mixing unit for a coolant arranged between a coolant system and the two tool halves (10, 11) of a moulding tool for deep drawing containers (9) made of thermoplastic material,
- comprising at least two mixing valves (40, 41) which are in communication with the coolant system (32) on the input side and with respectively one cooling circuit (36, 37) for the upper half (10) and the lower half (11) on the output side,
- comprising a circulating pump (42, 43) and means (42, 43, 53) for varying the flow rate in each cooling circuit (36, 37),
- comprising temperature sensors (44, 45, 46, 47) in each cooling circuit (36, 37) in the outflow and in the return,
- comprising a control system (52) for regulating the outflow temperature or the return temperature in the cooling circuits (36, 37) by controlling the mixing valves (40, 41) and adding coolant from the coolant system (32) into the cooling circuits (36, 37) and for regulating the flow rate in the cooling circuits (36, 37) depending on the difference between the outflow and return temperature by controlling the means (42, 43, 53) for varying the flow rate.

8. The mixing unit according to claim 7, **characterised in that** circulating pumps (42, 43) are incorporated as regulating pumps having a variable delivery as means (42, 43) for varying the flow rate.

9. The mixing unit according to claim 7, **characterised in that** variable-cross-section throttle valves (53) are inserted as means (53) for varying the flow rate after the circulating pumps.

10. The mixing unit according to any one of claims 7 to 9, **characterised by** respectively one flow meter (48, 49) arranged in the cooling circuits (36, 37), which is in communication with the control system (52).

11. The mixing unit according to any one of claims 7 to 10, **characterised by** respectively one return valve (50) arranged in the cooling circuit (36, 37).

12. The mixing unit according to any one of claims 7 to 11, **characterised by** a pressure sensor (54) arranged in the cooling circuit (36, 37) before the circulating pumps (42, 43).

13. The mixing unit according to any one of claims 7 to 12, **characterised by** a return valve (55) arranged in the return flow between the mixing valve (40, 41) and the coolant system (32).

## Revendications

1. Procédé de refroidissement des deux moitiés d'outil (10, 11) d'un outil de formage pour l'emboutissage de récipients (9) dans de la matière thermoplastique, dans lesquelles moitiés d'outil passe un flux de refroidisseur, la différence de température entre les deux moitiés d'outil (10, 11) étant maintenue à une valeur prédéfinie, lequel flux est envoyé par un dispositif central de fourniture de refroidisseur (32) à chaque fois vers une soupape de mixage (40, 41) pour la partie supérieure (10) et la partie inférieure (11) et envoyé de celle-ci à chaque fois par une pompe de circulation (42, 43) vers les deux moitiés d'outil (10, 11) par l'intermédiaire d'un circuit de refroidissement (36, 37) de manière à ce que la température de flux ou la température de reflux des circuits de refroidissement (36, 37) soit régulée à une valeur prédéfinie et qu'en cas de dépassement de cette valeur, un mélange de refroidisseur provenant du dispositif de fourniture de refroidisseur (32) soit réalisé par la soupape de mixage (40, 41) et que le flux volumique dans les circuits de refroidissement (36, 37) soit modulé en fonction de la différence entre la température de flux et de reflux.

2. Procédé selon la revendication 1, **caractérisé en ce que** la température de flux ou la température de reflux des circuits de refroidissement (36, 37) est régulée à une valeur différente.

3. Procédé selon une des revendications 1 ou 2, **caractérisé en ce que** le flux volumique dans les circuits de refroidissement (36, 37) est modulé en fonction de l'état de la machine de thermoformage - arrêt ou production-.

4. Procédé selon une des revendications 1 à 3, **caractérisé en ce que** le flux volumique dans les circuits de refroidissement (36, 37) est modulé sans paliers.

5. Procédé selon une des revendications 3 ou 4, **caractérisé en ce que** la modification du flux volumique est effectuée en changeant la puissance de pompage des pompes de circulation (42, 43).

6. Procédé selon une des revendications 3 ou 4, **caractérisé en ce que** la modification du flux volumique est effectuée en changeant la section transversale d'une soupape de réduction (53) dans chaque circuit de refroidissement (36, 37).

7. Unité de mixage pour refroidisseur, pouvant être disposée entre un dispositif de fourniture de refroidisseur et les deux moitiés d'outil (10, 11) d'un outil de formage pour l'emboutissage de récipients (9) dans un film de matière thermoplastique,
- qui présente au moins deux soupapes de mixage (40, 41) qui sont chacune en liaison côté entrée avec le dispositif de fourniture de refroidisseur (32) et côté sortie avec un circuit de refroidissement (36, 37) pour la partie supérieure (10) et la partie inférieure (11),
- qui, dans chaque circuit de refroidissement (36, 37), présente une pompe de circulation (42, 43) et des moyens (42, 43, 53) permettant de modifier le flux volumique,
- qui, dans chaque circuit de refroidissement (36, 37), présente, dans le flux et le reflux, des capteurs de température (44, 45, 46, 47),
- qui comporte une commande (52) pour réguler la température de flux ou la température de reflux dans les circuits de refroidissement (36, 37) en contrôlant les soupapes de mixage (40, 41) et en mélangeant du refroidisseur provenant du dispositif de fourniture de refroidisseur (32) dans les circuits de refroidissement (36, 37) et pour réguler le flux volumique dans les circuits de refroidissement (36, 37) en fonction de la différence entre la température de flux et de reflux en contrôlant les moyens (42,43,53) de modification du flux volumique.

8. Unité de mélange selon la revendication 7, **caractérisée en ce que** des pompes de circulation (42, 43) faisant office de pompe de réglage à capacité de transit modifiable sont intégrées en tant que moyens (42, 43) de modification du flux volumique.

9. Unité de mélange selon la revendication 7, **caractérisée en ce que** des soupapes de réduction (53) à section transversale modifiable sont intégrées derrière les pompes de circulation en tant que moyens (53) de modification du flux volumique.

10. Unité de mélange selon une des revendications 7 à 9, **caractérisée par** un mesureur de débit (48, 49) disposé à chaque fois dans les circuits de refroidissement (36, 37) et qui est en liaison avec la commande (52).

11. Unité de mélange selon une des revendications 7 à 10, **caractérisé par** une soupape anti-retour (50) disposée à chaque fois dans le circuit de refroidissement (36, 37).

12. Unité de mélange selon une des revendications 7 à 11, **caractérisée par** un capteur de pression (54) disposé à chaque fois dans le circuit de refroidissement (36, 37) avant les pompes de circulation (42, 43).

13. Unité de mélange selon une des revendications 7 à 12, **caractérisée par** une soupape anti-retour (55) disposée dans le reflux entre la soupape de mixage (40, 41) et le dispositif de fourniture de refroidisseur (32).
